# EUROPÄISCHE PATENTSCHRIFT

(11) **EP 3 131 786 B1**
(45) Veröffentlichungstag und Bekanntmachung des Hinweises auf die Patenterteilung: **21.03.2018**
(21) Anmeldenummer: 15731965.8
(22) Anmeldetag: 29.06.2015
(51) Int. Cl.: B60R 13/02, B60Q 3/54, B60Q 3/20

(54) **DEKORELEMENT FÜR EINEN INNENRAUM EINES KRAFTFAHRZEUGS, EINRICHTUNG FÜR EINEN INNENRAUM EINES KRAFTFAHRZEUGS, KRAFTFAHRZEUG UND VERFAHREN ZUR HERSTELLUNG EINES DEKORELEMENTS**
DECORATIVE ELEMENT FOR AN INTERIOR OF A MOTOR VEHICLE, DEVICE FOR AN INTERIOR OF A MOTOR VEHICLE, MOTOR VEHICLE, AND METHOD FOR PRODUCING A DECORATIVE ELEMENT
ÉLÉMENT DÉCORATIF POUR ESPACE INTÉRIEUR DE VÉHICULE AUTOMOBILE, INSTALLATION POUR ESPACE INTÉRIEUR DE VÉHICULE AUTOMOBILE, VÉHICULE AUTOMOBILE ET PROCÉDÉ DE FABRICATION D'UN ÉLÉMENT DÉCORATIF

(30) Priorität: 03.07.2014 DE 102014212979; 22.09.2014 DE 102014219074
(43) Veröffentlichungstag der Anmeldung: 22.02.2017
(73) Patentinhaber: Volkswagen Aktiengesellschaft, 38440 Wolfsburg (DE)
(72) Erfinder: ROTTMANN, Johannes, 38376 Süpplingenburg (DE)
(86) Internationale Anmeldenummer: PCT/EP2015/064736
(87) Internationale Veröffentlichungsnummer: WO 2016/001167

(56) Entgegenhaltungen:
- DE-A1-102009 034 944
- DE-A1-102010 017 494
- DE-A1-102012 015 057
- DE-U1- 29 808 949
- FR-A1- 2 937 603

## Beschreibung

Die Erfindung betrifft eine Einrichtung für einen Innenraum eines Kraftfahrzeugs gemäß Anspruch 1 und ein Kraftfahrzeug gemäß Anspruch 8.

Bei einer Einrichtung der hier angesprochenen Art mit einem Dekorelement weist das Dekorelement eine in montiertem Zustand dem Innenraum eines Kraftfahrzeugs zugewandte Sichtseite auf. Beispielsweise sind Dekorelemente bekannt, welche eine in einem In-Mold-Decoration-Verfahren (IMD-Verfahren) oder in einem In-Mold-Labeling-Verfahren (IML-Verfahren) hergestellte Sichtseite aufweisen, wobei solche Dekorelemente auch als IMD-Dekorelement oder als IML-Dekorelement bezeichnet werden. Dabei zeigt sich, dass solche Dekorelemente aus ästhetischen Erwägungen heraus an ihrer Sichtseite einen hohen Glanzgrad aufweisen, sodass diese glänzend und insbesondere spiegelnd ausgebildet ist. Es sind auch Dekorelemente bekannt, deren Sichtseite im ganzen matt ausgebildet ist, was jedoch aus den zuvor bereits angesprochenen ästhetischen Erwägungen häufig nicht bevorzugt wird. Durch den hohen Glanzgrad der Sichtseite können unerwünschte Spiegelungserscheinungen auftreten. Ist das Dekorelement relativ zu einem Leuchtelement, beispielsweise einem leuchtenden Funktionselement, insbesondere einem Anzeige- oder Bedienelement, so angeordnet, dass von dem Leuchtelement ausgehende Lichtstrahlen an der Sichtseite ins Auge eines Kraftfahrers reflektiert werden, kann dies zum einen stören und zum anderen gegebenenfalls zu Fehlablesungen des Anzeigeelements führen. Es kann versucht werden, ein Dekorelement mit hochglänzender Sichtseite derart in einem Kraftfahrzeug-Innenraum anzuordnen, dass Reflexionen des Leuchtelements den Betrachter nicht mehr erreichen können. Dies bedingt allerdings eine äußerst eingeschränkte Wahlfreiheit im Design des Innenraums, sodass gegebenenfalls Kompromisse in der ästhetischen Gestaltung nötig sind und/oder sich Bauraumprobleme ergeben.

Aus der Offenlegungsschrift DE 10 2009 034 944 A1 ist bereits ein Fahrzeuginnenraum-Dekorelement bekannt, das eine Oberfläche mit unterschiedlichen Strukturbereichen aufweist, von denen einer beispielsweise glänzend und der andere matt ausgebildet sein kann.

Aus der Offenlegungsschrift FR 2 937 603 A1 ist eine Einrichtung mit einem Dekorelement und einem Leuchtmittel bekannt, wobei das Leuchtmittel hinter dem Dekorelement angeordnet ist, um dieses zu durchleuchten. Aus der Offenlegungsschrift DE 10 2010 017 494 A1 ist ein weiteres Dekorelement bekannt, das mit Lichtleitern versehen ist, die sich von der Rückseite bis zur Sichtseite des Dekorelements erstrecken, um das Licht eines Leuchtmittels an die Sichtseite zu leiten. Aus der Offenlegungsschrift DE 10 2012 015 057 A1 ist außerdem ein Dekorelement mit einer Beleuchtungsvorrichtung bekannt, wobei auch hier das Dekorelement durchleuchtet wird.

Es ist Aufgabe der Erfindung, eine Einrichtung für einen Innenraum eines Kraftfahrzeugs und ein Kraftfahrzeug zu schaffen, bei welchen die genannten Nachteile nicht oder nur in verringertem Maße auftreten.

Die Aufgabe wird gelöst, indem eine Einrichtung mit den Merkmalen des Anspruchs 1 geschaffen wird. Dadurch, dass die Sichtseite eines Dekorelement der Einrichtung einen ersten, glänzenden Oberflächenbereich aufweist wobei sie zugleich einen zweiten, matten Oberflächenbereich aufweist, ist es möglich, bei bestimmungsgemäßer Anordnung der Einrichtung in einem Kraftfahrzeug störende Spiegelungserscheinungen in dem Kraftfahrzeug-Innenraum zu vermeiden, indem der zweite, matte Oberflächenbereich dort vorgesehen wird, wo solche Spiegelungserscheinungen zu erwarten sind. Das Dekorelement ist flexibel montierbar und in seiner Verwendung nicht auf bestimmte Winkellagen beim Einbau beschränkt. Dadurch entstehen keinerlei Design- und/oder Bauraumprobleme. Es ist möglich, dass die Sichtseite mehr als einen ersten, glänzenden Oberflächenbereich aufweist. Alternativ oder zusätzlich ist es möglich, dass die Sichtseite mehr als einen zweiten, matten Oberflächenbereich aufweist. Insbesondere können mehrere zweite, matte Oberflächenbereiche bedarfsgerecht auf der Sichtseite verteilt werden, insbesondere nämlich an Stellen, an denen störende Spiegelungserscheinungen zu erwarten sind.

Das Dekorelement ist für den Innenraum eines Personenkraftwagens vorgesehen.

Es ist möglich, in einem IMD- oder IML-Verfahren eine zur Herstellung der Sichtseite vorgesehene Folie nur bereichsweise in einem Bereich der zu bildenden Sichtseite zu positionieren, der später glänzend ausgebildet sein soll, wobei ein restlicher Oberflächenbereich der Sichtseite von einem in dem Verfahren verwendeten Kunststoffsubstrat gebildet wird und somit zumindest weniger glänzend, bevorzugt matt ist. In diesem Fall ist die Sichtseite nicht in einem homogenen Verfahren gebildet, sondern wird quasi bereichsweise in einem IMD- oder IML-Verfahren sowie bereichsweise in einem reinen Kunststoff-Spritzgussverfahren gebildet. Hieraus ergibt sich, dass die Oberfläche in einem ersten Bereich von einer Folienfarbe beschichtet ist, wobei sie in einem zweiten Bereich die Färbung und optischen Eigenschaften des Kunststoffsubstrats aufweist. Es entstehen dabei zwei optisch verschiedene Oberflächenbereiche, welche sich insbesondere in ihrer Färbung und/oder in ihrer Musterung unterscheiden. Weiterhin entsteht eine Stufe durch die Werkzeugtrennung im Bereich der Sichtseite.

Die Sichtseite ist bei einem bevorzugten Ausführungsbeispiel durch ein homogenes Verfahren gebildet, wodurch sie - bis auf die Unterschiede im Glanzgrad - in allen Oberflächenbereichen gleiche optische Eigenschaften und insbesondere eine gleiche Farbe aufweisen kann. Zudem wird eine Werkzeugtrennung und damit eine Stufe im Bereich der Sichtseite vermieden.

Die Sichtseite ist bevorzugt entlang ihrer gesamten Erstreckung durch ein homogenes Verfahren gebildet. Dies bedeutet, dass die gesamte Sichtseite mittels desselben Herstellverfahrens gebildet ist, wobei insbesondere keine verschiedenen Verfahren für den ersten Oberflächenbereich und den zweiten Oberflächenbereich verwendet werden. Beispielsweise kann die Sichtseite insgesamt in einem IMD-Verfahren oder in einem IML-Verfahren hergestellt sein. Die hier gewählte Formulierung, dass die Sichtseite durch ein homogenes Verfahren gebildet ist, bedeutet also, dass die Sichtseite insgesamt durch ein und dasselbe, einheitliche Verfahren gebildet ist, wobei diesem Merkmal darüber hinaus keine einschränkende Bedeutung zukommt. Insbesondere werden keine hierüber hinausgehenden Bedingungen an die Homogenität des Verfahrens gestellt.

Eine Weiterbildung der Erfindung sieht vor, dass der erste und der zweite Oberflächenbereich eine gleiche Farbe aufweisen. Bevorzugt weisen der erste und der zweite Oberflächenbereich dieselbe Farbe auf. In vorteilhafter Weise unterscheiden sich dann der erste Oberflächenbereich und der zweite Oberflächenbereich tatsächlich ausschließlich in ihrem Glanzgrad, sodass eine im Übrigen durchgängige, sehr ästhetische optische Erscheinung der Sichtseite ohne optische oder tatsächliche Stufen gegeben ist.

Eine Weiterbildung der Erfindung sieht vor, dass der erste Oberflächenbereich und der zweite Oberflächenbereich einen Winkel miteinander einschließen, der von 180° verschieden ist. Die beiden Oberflächenbereiche sind also insbesondere nicht parallel zueinander orientiert. Dementsprechend ist es möglich, dass von einem Leuchtelement ausgehende Lichtstrahlen geometrisch eine Reflexionsbedingung mit einem Sichtstrahl eines Insassen des Kraftfahrzeugs an dem zweien Oberflächenbereich erfüllen, wobei sie zugleich keine Reflexionsbedingung mit dem Sichtstrahl des Insassen an dem ersten Oberflächenbereich erfüllen. Dementsprechend droht eine störende Spiegelungserscheinung lediglich mit Bezug auf den zweiten Oberflächenbereich, wobei hier die Spiegelungserscheinung dadurch vermieden wird, dass der zweite Oberflächenbereich matt ausgebildet ist. Erweist also Streueigenschaften statt spiegelnden Eigenschaften auf, sodass trotz geometrisch erfüllter Reflexionsbedingung jedenfalls keine störende Lichtintensität ausgehend von dem Leuchtelement vermittelt über den zweiten Oberflächenbereich in das Auge des Insassen gelangen kann. Da von dem ersten Oberflächenbereich keine Reflexionsbedingung erfüllt wird, kann dieser glänzend ausgebildet sein, ohne dass störende Spiegelungserscheinungen auftreten. Vorzugsweise schließen die beiden Oberflächenbereiche einen Winkel von mindestens 30° bis höchstens 100°, vorzugsweise von mindestens 40° bis höchstens 90°, vorzugsweise von mindestens 50° bis höchstens 80°, vorzugsweise von 70° miteinander ein.

Eine Weiterbildung der Erfindung sieht vor, dass das Dekorelement in dem zweiten Oberflächenbereich eine Oberflächenstruktur aufweist, deren Rauigkeit größer ist als eine Rauigkeit einer Oberflächenstruktur in dem ersten Oberflächenbereich. Hierdurch kann auf besonders einfache und ökonomische Weise der zweite Oberflächenbereich matt ausgebildete werden, wobei der erste Oberflächenbereich glänzend ausgebildet sein kann. Insbesondere ist der zweite Oberflächenbereich im Vergleich zu dem ersten Oberflächenbereich bevorzugt aufgeraut. Bevorzugt weist der zweite Oberflächenbereich eine Narbung auf, durch welche er eine erhöhte Rauigkeit aufweist.

Eine Weiterbildung der Erfindung sieht vor, dass die Sichtseite durch ein IMD-Verfahren gebildet ist. Im Rahmen eines solchen Verfahrens wird eine Folie in eine Werkzeugkavität eingebracht, besonders bevorzugt als Folienband mithilfe eines Motors senkrecht durch die Kavität hindurchgerollt. Dabei ist die Folie mit einem zu übertragenden Motiv oder einer zu übertragenden Farbe versehen. Es ist möglich, dass einzelne Bilder auf der Folie durch Sensoren positioniert werden. Das Motiv oder die Farbe zeigt/zeigen dabei in Richtung einer Öffnung des Werkzeugs. Das Werkzeug wird Kunststoff aufgefüllt; insbesondere wird im Rahmen eines Spritzgießverfahrens Kunststoff eingespritzt. Alternativ ist allerdings auch ein Thermoformen möglich. Während die Kavität des Werkzeugs mit Kunststoff aufgefüllt wird, heftet sich die Farbe an das entstehende Guss- oder Formteil und wird typischerweise beim Öffnen der Form, mithin beim Entformen des fertigen Teils von der Folie abgelöst. Das beschichtete Teil kann nun entnommen werden. Es ist allerdings alternativ auch möglich, dass eine Einzelfolie verwendet wird, welche mit dem entstehenden Teil verbunden wird und auf diesem verbleibt. In diesem Fall wird die Sichtseite eines entstehenden Dekorelements nicht durch die von der Folie abgelöste Farbe, sondern vielmehr durch die Folie selbst gebildet.

Alternativ oder zusätzlich ist es möglich, dass die Sichtseite durch ein IML-Verfahren gebildet ist. Dabei unterscheidet sich das IML-Verfahren von einem IMD-Verfahren typischerweise dadurch, dass in dem IML-Verfahren separate Folien in das Werkzeug eingelegt werden, wobei bei dem IMD-Verfahren typischerweise ein Folienband mithilfe eines Motors senkrecht durch die Werkezugkavität hindurchgerollt wird. Diese Unterscheidung ist jedoch nicht zwingend, und die beiden Begriffe werden teilweise überlappend verwendet. Jedenfalls sind beide Verfahren - auch in ihrer Abgrenzung voneinander - zur Herstellung des hier vorgeschlagenen Dekorelements geeignet und stellen besonders günstige sowie einfache Verfahren zur Herstellung des Dekorelements dar.

Eine Weiterbildung der Erfindung sieht vor, dass das Dekorelement als Blende für eine Mittelkonsole oder eine Instrumententafel oder einen Dachhimmel oder eine Türverkleidung oder eine Seitenverkleidung eines Kraftfahrzeugs ausgebildet ist. Insbesondere in diesem Fall ist es möglich, dass es oberhalb von einem leuchtenden Anzeige- und/oder Bedienelement angeordnet ist, sodass sich die Vorteile des Dekorelements in vollem Umfang verwirklichen.

Die Einrichtung weist wenigstens ein Leuchtelement auf. Dabei ist unter einem Leuchtelement bevorzugt ein im Betrieb des Kraftfahrzeugs leuchtendes Funktionselement, insbesondere ein Anzeigeelement und/oder ein Bedienelement zu verstehen, welches insbesondere selbstleuchtend ausgebildet ist, also Licht emittiert. Es kann sich hierbei beispielsweise um eine Temperaturanzeige einer Klimaautomatik, eine Innenraumtemperaturanzeige oder eine Außentemperaturanzeige, oder um einen Bedienknopf, beispielsweise einer Klimabedieneinheit, handeln. Die Einrichtung ist gekennzeichnet durch ein Dekorelement gemäß einer der zuvor beschriebenen Ausführungsformen, wobei bei bestimmungsgemäßer Anordnung der Einrichtung in einem Kraftfahrzeug der zweite Oberflächenbereich des Dekorelements so angeordnet ist, dass eine Reflexionsbedingung zwischen einem von dem Leuchtelement ausgehenden Lichtstrahl und einem Sichtstrahl eines Insassen des Kraftfahrzeugs geometrisch erfüllt, und wobei der erste Oberflächenbereich des Dekorelements so angeordnet ist, dass hier keine Reflexionsbedingung zwischen einem von dem Leuchtelement ausgehenden Lichtstrahl und einem Sichtstrahl des Insassen geometrisch erfüllt ist. In Zusammenhang mit der Einrichtung verwirklichen sich die Vorteile, die bereits in Zusammenhang mit dem Dekorelement beschreiben wurden.

Insbesondere können im Bereich des ersten Oberflächenbereichs keine unerwünschten Spiegelungserscheinungen auftreten, weil hier keine Reflexionsbedingung zwischen einem von dem Lichtelement ausgehenden Lichtstrahl und einem Sichtstrahl des Insassen erfüllt ist. Solche unerwünschten Spiegelungserscheinungen könnten höchstens in dem zweiten Oberflächenbereich auftreten, da hier wenigstens eine solche Reflexionsbedingung geometrisch erfüllt ist. Da jedoch der zweite Oberflächenbereich matt ausgebildet ist und Streueigenschaften aufweist, findet hier gleichwohl keine relevante Reflexion statt, sodass auch in diesem Bereich unerwünschte Spiegelungserscheinungen vermieden werden.

Die Einrichtung ist bevorzugt als Bedieneinrichtung für das Kraftfahrzeug ausgebildet, insbesondere als in eine Mittelkonsole oder eine Instrumententafel oder einen Dachhimmel oder eine Türverkleidung oder eine Seitenverkleidung integrierte Bedieneinrichtung, oder als Mittelkonsole eines Kraftfahrzeugs. Besonders bevorzugt ist die Einrichtung als Bedieneinrichtung für einen Personenkraftwagen ausgebildet.

Die Reflexionsbedingung wird bevorzugt mit Bezug auf einen Sichtstrahl eines Fahrers des Kraftfahrzeugs ermittelt, da eine Störung des Fahrers durch unerwünschte Spiegelungserscheinungen mit besonderem Vorteil vermieden wird.

Bevorzugt ist der erste Oberflächenbereich des Dekorelements bei bestimmungsgemäßer Anordnung der Einrichtung in dem Kraftfahrzeug so angeordnet, dass er höchstens indirekt von dem Leuchtelement beleuchtbar ist. Ein von dem Leuchtelement ausgehender Lichtstrahl trifft somit nicht direkt auf den ersten Oberflächenbereich und kann somit durch diesen auch nicht in das Auge eines Insassen reflektiert werden. Insbesondere wird bevorzugt ein von dem Leuchtelement ausgehender Lichtstrahl nicht von dem ersten Oberflächenbereich in Richtung des Insassen, insbesondere in Richtung des Sichtstrahls des Insassen, abgelenkt. Bei dem zweiten Oberflächenbereich wäre dies dagegen der Fall, wenn dieser glänzend wäre oder spiegelnde Eigenschaften aufweisen würde. Da er jedoch matt ausgebildet ist, werden auch hier Reflexionen und damit unerwünschte Spiegelungseigenschaften vermieden.

Die Aufgabe wird auch gelöst, indem ein Kraftfahrzeug mit den Merkmalen des Anspruchs 8 geschaffen wird. Das Kraftfahrzeug zeichnet sich aus durch eine Einrichtung gemäß einer der zuvor beschriebenen Ausführungsformen. Die Einrichtung ist dabei in zuvor beschriebener Weise bestimmungsgemäß in dem Kraftfahrzeug angeordnet. Somit verwirklichen sich für das Kraftfahrzeug die Vorteile, die bereits in Zusammenhang mit dem Dekorelement und der Einrichtung erläutert wurden.

Eine Weiterbildung der Erfindung sieht vor, dass das Kraftfahrzeug als Personenkraftwagen ausgebildet ist. Insbesondere ist bevorzugt die Einrichtung als Bedieneinrichtung, und ganz besonders bevorzugt als Bedieneinrichtung einer Mittelkonsole oder einer Instrumententafel oder eines Dachhimmels oder einer Türverkleidung oder einer Seitenverkleidung, oder als Mittelkonsole des Kraftfahrzeugs und insbesondere des Personenkraftwagens ausgebildet.

Ein Verfahren zur Herstellung eines Dekorelements einer Einrichtung gemäß einer der zuvor beschriebenen Ausführungsformen weist folgende Schritte auf: Es wird eine Werkzeugkavität bereitgestellt, welche eine Formfläche aufweist, die eine Sichtseite des Dekorelements bildet. Die Formfläche weist in einem ersten Bereich eine niedrigere Rauheit auf, wobei sie in einem zweiten Bereich eine höhere Rauheit aufweist. Die Rauheit der Formfläche ist also in dem ersten Bereich niedriger als in dem zweiten Bereich. Es wird wenigstens ein Kunststoff in die Werkzeugkavität eingebracht. Auf diese Weise wird im Bereich der Formfläche die Sichtseite gebildet, wobei die in dem zweiten Bereich erhöhte Rauigkeit auf die Sichtseite übertragen wird. Dabei wird insbesondere der erste Oberflächenbereich der Sichtseite von dem ersten Bereich der Formfläche gebildet, wobei der zweite Oberflächenbereich der Sichtseite von dem zweiten Bereich der Formfläche gebildet wird. Mithilfe des Verfahrens ist das Dekorelement sehr einfach herstellbar, wobei sich die Vorteile verwirklichen, die bereits in Zusammenhang mit dem Dekorelement, der Einrichtung und dem Kraftfahrzeug erläutert wurden.

Vorzugsweise wird eine Werkzeugkavität verwendet, deren Formfläche bereichsweise strukturiert ist. Dabei ist die Formfläche insbesondere in dem zweiten Bereich strukturiert. Insbesondere wird bevorzugt eine Formfläche verwendet, welche bereichsweise eine Narbung aufweist. Insbesondere weist die Formfläche in dem zweiten Bereich eine Narbung auf.

Der Kunststoff wird vorzugsweise in die Werkzeugkavität eingespritzt. In diesem Fall wird ein Spritzgießverfahren zur Herstellung des Dekorelements angewendet. Alternativ ist es möglich, dass ein Thermoformverfahren zur Herstellung des Dekorelements angewendet wird.

Nach dem Erstarren des Kunststoffs in der Werkzeugkavität wird diese bevorzugt geöffnet, und das fertige Dekorelement wird der Werkzeugkavität entnommen. Auf diese Weise wird insgesamt ein Dekorelement erhalten.

Eine vorteilhafte Weiterbildung sieht vor, dass vor dem Einbringen des Kunststoffs in die Werkzeugkavität an die Formfläche eine Folie angelegt wird. Im Rahmen des Verfahrens wird dann die erhöhte Rauigkeit in dem zweiten Bereich der Formfläche auf die Folie übertragen, wodurch sie dann letztlich auch auf die gebildete Sichtseite übertragen wird. Insbesondere kommt bevorzugt ein IMD-Verfahren oder ein IML-Verfahren zur Anwendung.

Die Beschreibung des Dekorelements, der Einrichtung und des Kraftfahrzeugs einerseits und des Verfahrens andererseits sind komplementär zueinander zu verstehen. Insbesondere sind Verfahrensschritte, die explizit oder implizit in Zusammenhang mit dem Dekorelement, der Einrichtung oder dem Kraftfahrzeug beschreiben wurden, bevorzugt einzeln oder miteinander kombiniert Verfahrensschritte einer bevorzugten Ausführungsform des Verfahrens. Merkmale des Dekorelements, der Einrichtung oder des Kraftfahrzeugs, welche in Zusammenhang mit dem Verfahren explizit oder implizit beschrieben wurden, sind bevorzugt einzeln oder miteinander kombiniert Merkmale eines bevorzugten Ausführungsbeispiels des Dekorelements, der Einrichtung oder des Kraftfahrzeugs. Das Verfahren zeichnet sich bevorzugt durch wenigstens einen Verfahrensschritt aus, der durch wenigstens ein Merkmal des Dekorelements, der Einrichtung oder des Kraftfahrzeugs bedingt ist. Das Dekorelement, die Einrichtung und/oder das Kraftfahrzeug zeichnet/zeichnen sich bevorzugt durch wenigstens ein Merkmal aus, welches durch wenigstens einen Verfahrensschritt des Verfahrens bedingt ist.

Die Erfindung wird im Folgenden anhand der Zeichnung näher erläutert. Dabei zeigen:
- Figur 1: eine schematische Darstellung eines Kraftfahrzeugs mit einer Einrichtung gemäß dem Stand der Technik, und
- Figur 2: eine schematische Darstellung eines erfindungsgemäßen Kraftfahrzeugs mit einer erfindungsgemäßen Einrichtung und einem erfindungsgemäßen Dekorelement.

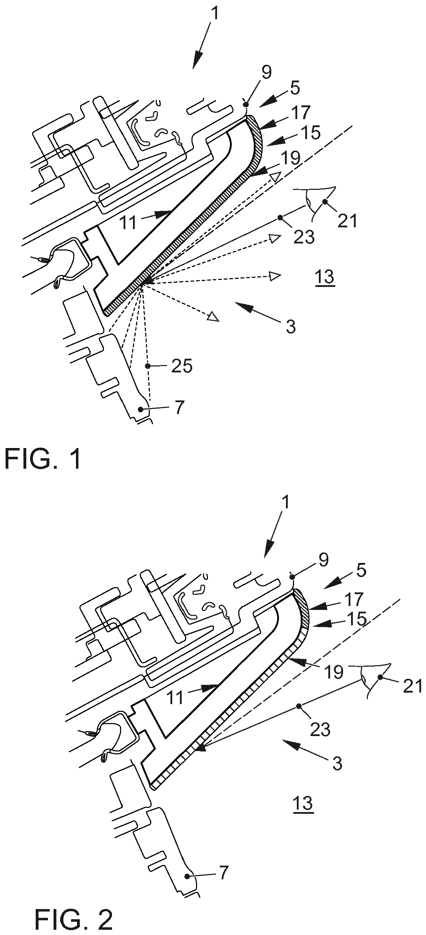

Figur 1 zeigt eine schematische Darstellung eines Kraftfahrzeugs 1 mit einer Einrichtung 3, welche hier an einer Mittelkonsole 5 angeordnet ist. Die Einrichtung 3 weist ein Leuchtelement 7 auf, das hier als Bedien- oder Anzeigeelement einer Klimaautomatik ausgebildete ist. In Hochrichtung des Kraftfahrzeugs 1 ist zwischen einer Anzeigeeinrichtung 9 und dem Leuchtelement 7 ein Dekorelement 11 angeordnet, das als Blende für die Mittelkonsole 5 ausgebildet ist. Das Dekorelement 11 weist eine einem Innenraum 13 des Kraftfahrzeugs zugewandte Sichtseite 15 auf, welche hier entlang ihrer gesamten Erstreckung durch ein homogenes Verfahren, beispielsweise durch ein IMD-Verfahren oder ein IML-Verfahren hergestellt ist. Die Sichtseite 15 weist einen ersten Oberflächenbereich 17 und einen zweiten Oberflächenbereich 19 auf, wobei der erste Oberflächenbereich 17 mit dem zweiten Oberflächenbereich 19 einen Winkel einschließt. Die Sichtseite 15 ist durchgehend homogen hochglänzend ausgebildet, wobei sich kein optischer Unterschied zwischen dem ersten Oberflächenbereich 17 und dem zweiten Oberflächenbereich 19 ergibt.

Schematisch dargestellt ist hier ein Auge 21 eines Insassen des Kraftfahrzeugs 1, insbesondere das Auge 21 des Kraftfahrers, wobei als durchgezogener Pfeil 23 ein Sichtstrahl des Insassen, insbesondere des Fahrers dargestellt ist. Es zeigt sich nun, dass von dem Leuchtelement 7 ausgehende Lichtstrahlen, welche hier durch gestrichelte Pfeile dargestellt sind, von denen der besseren Übersichtlichkeit wegen nur eine mit dem Bezugszeichen 25 gekennzeichnet ist, an dem zweiten Oberflächenbereich 19 reflektiert und zumindest teilweise in Richtung des Sichtstrahls 23 abgelenkt werden. Es existiert also eine Vielzahl von Lichtstrahlen 25, für welche eine Reflexionsbedingung mit dem Sichtstrahl 23 erfüllt sind. Selbstverständlich existieren diese Reflexionsbedingungen nicht nur an dem in Figur 1 hervorgehobenen Punkt, sondern an einer Vielzahl von Punkten verteilt über den zweiten Oberflächenbereich 19. Aus diesem Grund treten in dem Auge 21 des Insassen störende Spiegelungserscheinungen des Leuchtelements 7 auf, was zu Irritationen und/oder zu Fehlablesungen des Leuchtelements 7 führen kann. Der erste Oberflächenbereich 17 wird dagegen nicht direkt von dem Leuchtelement 7 beleuchtet, wobei hier dementsprechend auch keine solchen Reflexionsbedingungen erfüllt sind.

Figur 2 zeigt eine schematische Darstellung eines Ausführungsbeispiels eines Kraftfahrzeugs 1 mit einer Einrichtung 3 und einem Dekorelement 11 gemäß der Erfindung. Gleiche und funktionsgleiche Elemente sind mit gleichen Bezugszeichen versehen, sodass insofern auf die vorangegangene Beschreibung verwiesen wird. Bei dem dargestellten Ausführungsbeispiel ist die Sichtseite 15 durch ein homogenes Verfahren gebildet, vorzugsweise durch ein IML-Verfahren oder ein IMD-Verfahren. Besonders bevorzugt ist das gesamte Dekorelement 11 in einem IMD-Verfahren oder einem IML-Verfahren gebildet. Der erste Oberflächenbereich 17 ist hier - wie bereits in Zusammenhang mit Figur 1 erläutert - glänzend ausgebildet, wobei im Unterschied zu dem Dekorelement 11 gemäß Figur 1 hier bei dem erfindungsgemäßen Ausführungsbeispiel der zweite Oberflächenbereich 19 matt ausgebildet ist. Insbesondere weist der zweite Oberflächenbereich 19 bevorzugt eine Oberflächenstruktur auf, deren Rauigkeit höher ist als die Rauigkeit einer Oberflächenstruktur in dem ersten Oberflächenbereich 17. Dadurch, dass der zweite Oberflächenbereich 19 matte optische Eigenschaften beziehungsweise Streueigenschaften aufweist, werden unerwünschte Spiegelungserscheinungen in dem Auge 21 vermieden, selbst wenn oder obwohl eine Reflexionsbedingung zwischen wenigstens einem von dem Leuchtelement 7 ausgehenden Lichtstrahl und dem Sichtstrahl 23 geometrisch erfüllt ist. In dem ersten Oberflächenbereich 17 drohen dagegen keine unerwünschten Spiegelungserscheinungen, weil hier keine Reflexionsbedingung der zuvor angesprochenen Art geometrisch erfüllt ist. Es ist daher ohne weiteres möglich, den ersten Oberflächenbereich 17 glänzend auszugestalten.

Zugleich können der erste Oberflächenbereich 17 und der zweite Oberflächenbereich 19 in allen übrigen optischen Eigenschaften übereinstimmen, insbesondere eine gleiche oder dieselbe Farbe aufweisen. In diesem Fall wird eine optische Trennung der beiden Bereiche weitestgehend vermieden, wobei zudem durch das homogene Herstellungsverfahren keine Werkzeugtrennung und insbesondere keine Stufe im Bereich der Stirnseite 15 und damit in einem Griffbereich des Dekorelements 11 auftritt.

Das Dekorelement 11 zeichnet sich durch eine hohe Designfreiheit oder Designtreue aus, insbesondere weil keine besonderen Bedingungen an eine Einbaulage für das Dekorelement 11 existieren. Es kann in einem durchgehenden, homogenen Farbton gehalten und/oder mit einem durchgehenden, einheitlichen Muster versehen sein, wobei sich der Farbton und/oder das Muster über die gesamte Sichtseite 15 erstrecken können.

Der zweite Oberflächenbereich 19 ist im Vergleich zum ersten Oberflächenbereich 17 lediglich mattiert, wobei hier auf einen Glanz verzichtet wird. Dies ist jedoch ohne Farbwechsel möglich. Der mattierte, zweite Oberflächenbereich 19 wird bevorzugt durch eine Narbung in einem Werkzeug zur Herstellung des Dekorelements 11 erzeugt. In einer Übergangszone zwischen einem zweiten, genarbten Oberflächenbereich 19 und einem ersten, glänzenden Oberflächenbereich 17 kann vorteilhaft ein Narbübergangsbereich angeordnet sein, in dem die Narbung allmählich ausläuft, um einen visuell und haptisch besonders harmonischen Übergangsverlauf zu bewirken.

Insgesamt zeigt sich, dass mithilfe des Dekorelements 11, der Einrichtung 3, des Kraftfahrzeugs 1 und des Verfahrens zur Herstellung des Dekorelements 11 unerwünschte Spiegelungserscheinungen in dem Auge 21 eines Insassen - insbesondere des Fahrers - wirksam vermieden werden können, ohne dass deswegen ästhetische Kompromisse eingegangen werden müssen oder Bauraumprobleme resultieren.

## Patentansprüche

1. Einrichtung (3) für einen Innenraum (13) eines Kraftfahrzeugs (1), mit wenigstens einem Leuchtelement (7) und mit einem Dekorelement (11) mit einer bei bestimmungsgemäßer Anordnung der Einrichtung (3) in einem Kraftfahrzeug (1) dem Innenraum (13) des Kraftfahrzeugs (1) zugewandten Sichtseite (15), wobei die Sichtseite (15) wenigstens einen ersten, glänzenden Oberflächenbereich (17) aufweist, und wobei die Sichtseite (15) wenigstens einen zweiten, matten Oberflächenbereich (19) aufweist, **dadurch gekennzeichnet, dass** bei bestimmungsgemäßer Anordnung der Einrichtung (3) in dem Kraftfahrzeug (1) der zweite Oberflächenbereich (19) so angeordnet ist, dass eine Reflexionsbedingung zwischen einem von dem Leuchtelement (7) ausgehenden Lichtstrahl (25) und einem Sichtstrahl (23) eines Passagiers des Kraftfahrzeugs (1) geometrisch erfüllt ist, wobei der erste Oberflächenbereich (17) des Dekorelements (11) so angeordnet ist, dass keine Reflexionsbedingung zwischen einem von dem Leuchtelement (7) ausgehenden Lichtstrahl (25) und dem Sichtstrahl (23) geometrisch erfüllt ist.

2. Einrichtung nach dem vorhergehenden Anspruch, **dadurch gekennzeichnet, dass** der erste und der zweite Oberflächenbereich (17,19) eine gleiche Farbe aufweisen.

3. Einrichtung nach einem der vorhergehenden Ansprüche, **dadurch gekennzeichnet, dass** der erste Oberflächenbereich (17) und der zweite Oberflächenbereich (19) einen Winkel miteinander einschließen, welcher von 180° verschieden ist.

4. Einrichtung nach einem der vorhergehenden Ansprüche, **dadurch gekennzeichnet, dass** das Dekorelement (11) in dem zweiten Oberflächenbereich (19) eine Oberflächenstruktur aufweist, deren Rauigkeit größer ist als eine Rauigkeit einer Oberflächenstruktur in dem ersten Oberflächenbereich (17).

5. Einrichtung nach einem der vorhergehenden Ansprüche, **dadurch gekennzeichnet, dass** die Sichtseite (15) durch ein In-Mold-Decoration-Verfahren oder durch ein In-Mold-Labeling-Verfahren gebildet ist.

6. Einrichtung nach einem der vorhergehenden Ansprüche, **dadurch gekennzeichnet, dass** das Dekorelement (11) als Blende für eine Mittelkonsole (5) oder eine Instrumententafel oder einen Dachhimmel oder eine Türverkleidung oder eine Seitenverkleidung des Kraftfahrzeugs (1) ausgebildet ist.

7. Einrichtung nach einem der vorhergehenden Ansprüche, **dadurch gekennzeichnet, dass** das Dekorelement (11) als Blende für eine Mittelkonsole (5) des Kraftfahrzeugs (1) ausgebildet ist.

8. Kraftfahrzeug (1), **gekennzeichnet durch** eine Einrichtung (3) nach einem der Ansprüche 1 bis 7.

## Claims

1. Device (3) for an interior (13) of a motor vehicle (1), having at least one lighting element (7) and having a decorative element (11) with a visible side (15) that faces the interior (13) of the motor vehicle (1) when the device (3) is arranged as intended in a motor vehicle (1), the visible side (15) having at least one first, glossy surface region (17), and the visible side (15) having at least one second, matt surface region (19), **characterized in that** when the device (3) is arranged as intended in the motor vehicle (1), the second surface region (19) is arranged such that a reflection condition between a light beam (25) originating from the lighting element (7) and a line of vision (23) of a passenger of the motor vehicle (1) is fulfilled geometrically, wherein the first surface region (17) of the decorative element (11) is arranged such that no reflection condition between a light beam (25) originating from the lighting element (7) and the line of vision (23) is fulfilled geometrically.

2. Device according to the preceding claim, **characterized in that** the first and the second surface region (17, 19) have the same colour.

3. Device according to one of the preceding claims, **characterized in that** the first surface region (17) and the second surface region (19) enclose an angle with each other which is different from 180°.

4. Device according to one of the preceding claims, **characterized in that** the decorative element (11) in the second surface region (19) has a surface structure of which the roughness is greater than a roughness of a surface structure in the first surface region (17).

5. Device according to one of the preceding claims, **characterized in that** the visible side (15) is formed by an in-mould decoration method or an in-mould labelling method.

6. Device according to one of the preceding claims, **characterized in that** the decorative element (11) is formed as a cover for a central console (5) or an instrument panel or a roof lining or a door lining or a side lining of the motor vehicle (1).

7. Device according to one of the preceding claims, **characterized in that** the decorative element (11) is formed as a cover for a central console (5) of the motor vehicle (1).

8. Motor vehicle (1), **characterized by** a device (3) according to one of Claims 1 to 7.

## Revendications

1. Dispositif (3) pour un espace intérieur (13) d'un véhicule automobile (1), avec au moins un élément d'éclairage (7) et avec un élément décoratif (11) avec un côté visible (15) tourné en agencement normal du dispositif (3) dans un véhicule automobile (1) vers l'espace intérieur (13) du véhicule automobile (1), dans lequel le côté visible (15) présente au moins une première région de surface brillante (17), et dans lequel le côté visible (15) présente au moins une deuxième région de surface mate (19), **caractérisé en ce que**, en agencement normal du dispositif (3) dans le véhicule automobile (1), la deuxième région de surface (19) est disposée de telle manière qu'une condition de réflexion entre un rayon lumineux (25) provenant de l'élément d'éclairage (7) et un rayon visuel (23) d'un passager du véhicule automobile (1) soit géométriquement remplie, dans lequel la première région de surface (17) de l'élément décoratif (11) est disposée de telle manière qu'aucune condition de réflexion entre un rayon lumineux (25) provenant de l'élément d'éclairage (7) et le rayon visuel (23) ne soit géométriquement remplie.

2. Dispositif selon la revendication précédente, **caractérisé en ce que** la première et la deuxième région de surface (17, 19) présentent une même couleur.

3. Dispositif selon l'une quelconque des revendications précédentes, **caractérisé en ce que** la première région de surface (17) et la deuxième région de surface (19) forment ensemble un angle, qui est différent de 180°.

4. Dispositif selon l'une quelconque des revendications précédentes, **caractérisé en ce que** l'élément décoratif (11) présente dans la deuxième région de surface (19) une structure de surface, dont la rugosité est plus grande qu'une rugosité d'une structure de surface dans la première région de surface (17).

5. Dispositif selon l'une quelconque des revendications précédentes, **caractérisé en ce que** le côté visible (15) est formé par un procédé de décoration dans le moule ou par un procédé de pose d'étiquette dans le moule.

6. Dispositif selon l'une quelconque des revendications précédentes, **caractérisé en ce que** l'élément décoratif (11) est formé comme un écran pour une console centrale (5) ou un tableau de bord ou un ciel de toit ou un habillage de porte ou un habillage latéral du véhicule automobile (1).

7. Dispositif selon l'une quelconque des revendications précédentes, **caractérisé en ce que** l'élément décoratif (11) est formé comme un écran pour une console centrale (5) du véhicule automobile (1).

8. Véhicule automobile (1), **caractérisé par** un dispositif (3) selon l'une quelconque des revendications 1 à 7.
